# EUROPÄISCHE PATENTSCHRIFT

(11) **EP 4 001 814 B1**
(45) Veröffentlichungstag und Bekanntmachung des Hinweises auf die Patenterteilung: **09.07.2025**
(21) Anmeldenummer: 21207543.6
(22) Anmeldetag: 10.11.2021
(51) Int. Cl.: F26B 3/04, F26B 21/00, F26B 23/00

(54) **TROCKNER ZUM TROCKNEN VON TROCKENGUT, INSBESONDERE TEXTILIEN**
DRYER FOR DRYING GOODS, IN PARTICULAR TEXTILES
SÉCHOIRS POUR LE SÉCHAGE DE PRODUITS À SÉCHER, EN PARTICULIER LES TEXTILES

(30) Priorität: 12.11.2020 DE 102020129945
(43) Veröffentlichungstag der Anmeldung: 25.05.2022
(73) Patentinhaber: Wiecek, Tadeusz Max, 50859 Köln (DE); Wiecek, Elzbieta, 50859 Köln (DE); Gesch, Natalie, 50259 Pulheim (DE)
(72) Erfinder: Wiecek, Tadeusz Max, 50859 Köln (DE); Wiecek, Elzbieta, 50859 Köln (DE); Gesch, Natalie, 50259 Pulheim (DE)
(74) Vertreter: Patentanwälte Bauer Vorberg Kayser

(56) Entgegenhaltungen:
- WO-A1-2011/096812
- DE-A1- 102006 003 552
- JP-A- 2005 241 239
- JP-B2- 3 970 731
- US-A- 4 601 115

## Beschreibung

Die Erfindung betrifft einen Trockner zum Trocknen von Trockengut, insbesondere Textilien mit,
- einer Wärmekammer und einer Kältekammer, die gasdicht gegeneinander und/oder gegen die Außenumgebung abschließbar ausgebildet sind,
- einer Verbindungsleitung, die die Kammern fluidleitend miteinander verbindet und ein Schließventil aufweist,
- einer mit mindestens einer der zwei Kammern wirkverbindbaren Vakuumpumpe,
- einer mit den zwei Kammern wirkverbindbaren Wärmepumpe, wobei die Wärmepumpe einen Kondensator und einen Verdampfer umfasst.

Weiterhin betrifft die Erfindung ein Verfahren zum Trocknen von Trockengut, insbesondere Textilien, das mit einem solchen Trockner durchgeführt wird.

In bekannten Trocknungsverfahren, insbesondere Trocknungsverfahren für Textilien, wird das zu trocknende Gut durch Verdunsten der flüssigen Phase, insbesondere durch Verdunsten von Wasser, getrocknet. Verdunstung tritt dabei ein, wenn der temperaturabhängige Sättigungsdampfdruck größer ist als der vorherrschende Partialdruck der in die Umgebungsatmosphäre verdunsteten Substanz. Durch ständiges Austauschen der gesättigten Atmosphäre wird der Verdunstungsprozeß aufrechterhalten. Die Verdunstung wird dabei durch Zuführung von Wärmeenergie begünstigt. Unterstützend kann auch der Druck der Umgebungsatmosphäre gesenkt werden, wodurch weniger Wärmeenergie zugeführt werden muss.

Aus der DE 36 41 665 A1 ist ein energiesparendes Vakuumtrockenverfahren sowie eine Vorrichtung zum Trocknen von Textilgut bekannt. Bei diesem Verfahren wird das zu trocknende Textilgut mit dem Kondensator einer Wärmepumpe erwärmt, und der Wasserdampf kondensiert an dem Verdampfer der Wärmepumpe aus. Sowohl Verdampfer als auch Kondensator befinden sich innerhalb einer Vakuumkammer, die auch den Wäschebehälter umfasst. Die Siedetemperatur wird durch Erzeugen eines Unterdruckes in der Vakuumkammer abgesenkt. Nachteilig ist an diesem Verfahren zum einen, dass sowohl das Verdampfen als auch die anschließende Kondensation der Feuchtigkeit im selben Vakuumbehälter stattfindet. Somit muss durch einen entsprechend groß ausgebildeten Behälter verhindert werden, dass das Trockengut in Kontakt mit dem Kondensat kommt. Zum anderen muss ein größer dimensioniertes Kältereservoir vorgesehen werden um ein erneutes Verdampfen des Kondensates bis zum Ende des Trocknungsverfahren zu verhindern. Alternativ kann unter erhöhtem Energieaufwand das Kondensat abgepumpt werden.

Aus der DE 20 2009 013 968 U1 ist ein Vakuumtrockengerät bekannt. Das Trockengut wird in dem Vakuumtrockengerät auf Trockengutträgern angeordnet. Die Trockengutträger sind mit Peltierelementen verbunden. Der Trocknungsvorgang wird mittels Sensoren für Temperatur und Druck überwacht. Nachteilig an dem offenbarten Vakuumtrockengerät ist, dass während des gesamten Trocknungsvorganges die feuchte Luft mit einer Vakuumpumpe unter erhöhtem Energieaufwand abgepumpt werden muss.

In der EP 0 505 677 A1 wird ein Mehrkammer-Vakuumbandtrockner offenbart, in dem in mehreren Trockenkammern unterschiedliche Druckverhältnisse hergestellt werden. Hiermit wird das Problem der Begrenzung der Produktendfeuchte durch die primär eingebrachte Feuchtigkeit gelöst. Weiterhin nachteilig bleibt jedoch der erhöhte Energieaufwand für den Betrieb der Vakuumpumpen.

Die Druckschrift DE 10 2012 107 368 B4 beschreibt einen gattungsgemäßen Trockner, der insbesondere zum Trocknen von Textilien vorgesehen ist. Der Wäschetrockner und das Verfahren zum Betreiben des Wäschetrockners ist vorteilhaft und führt auch zu zufriedenstellenden Ergebnissen. Trotzdem ist der Energieaufwand relativ hoch und der Trockenvorgang dauert verhältnismäßig lange.

Die Druckschrift JP 2005 241239 A offenbart einen Trockner gemäß dem Stand der Technik.

Der Erfindung liegt die Aufgabe zugrunde, einen Trockner und ein Verfahren zum Betreiben eines derartigen Trockners zur Trocknung von zu trocknenden Gütern, insbesondere Textilien, bereitzustellen, welche die Nachteile des Standes der Technik nicht aufweisen. Insbesondere sollen der Trockner und das Verfahren möglichst energieeffizient sein. Die zu trockenen Güter sollen möglichst schonend getrocknet werden.

Die Erfindung löst diese Aufgabe durch einen Trockner mit den Merkmalen des Anspruchs 1 und durch ein mit diesem Trockner anwendbares Verfahren mit den Merkmalen des unabhängigen Verfahrensanspruchs gelöst.

Der erfindungsgemäße Trockner umfasst demnach neben der Wärme- und der Kältekammer, der Vakuumpumpe und der Wärmepumpe zusätzlich einen Dampferzeuger, der erzeugten Dampf über eine Dampfleitung in die Wärmekammer leitet. Der vom Dampferzeuger zugeleitete Dampf entzieht dem Trockengut in der Wärmekammer Feuchtigkeit wodurch das Trockengut getrocknet wird. Der entstehende feuchte Dampf wird anschließend über die Verbindungsleitung der Kältekammer zugeführt.

Der erfindungsgemäße Trockner eignet sich insbesondere für die Trocknung von Textilien, ist aber auch für eine effiziente und schnelle Trocknung von zum Beispiel technischen Bauteilen oder beliebigen anderen Gegenständen oder Materialen geeignet.

Durch die Nutzung des Dampfers als Energieträger und die Druckunterschiede in den verschiedenen Kammern kann eine hocheffiziente Trocknung durchgeführt. Insbesondere dann, wenn das System im Wesentlichen luftfrei ist, verläuft die Energieübertragung zwischen Dampf und der im Trockengut gespeicherten Feuchtigkeit direkt und damit wesentlich schneller. Trocknerdampf ist als Energieträger viel effizienter, da seine Wärmekapazität im Vergleich zu trockener Luft gleicher Temperatur deutlich höher ist.

Die Wärmekammer und die Kältekammer sind zumindest über eine Verbindungsleitung miteinander verbunden, in der ein Schließventil angeordnet ist. Der Begriff Schließventil wird als Synonym für sämtliche geeigneten Schaltmittel, insbesondere Ventile verwendet.

In der Wärmekammer ist das Trockengut einlagerbar. In der Kältekammer findet die Kondensation der verdampften Feuchtigkeit statt. Ferner umfasst der erfindungsgemäße Trockner mindestens eine, mit mindestens der Kältekammer wirkverbundene Vakuumpumpe. Durch Verdunstung von Feuchtigkeit in der Wärmekammer wird Überdruck und durch Kondensation der Feuchtigkeit in der Kältekammer ein Unterdruck erzeugt, so dass sich ein Druckunterschied zwischen Wärmekammer und Kältekammer einstellt. Die Vakuumpumpe ist zum bedarfsabhängigen Abpumpen trockener Luft aus der Kältekammer ausgebildet.

Die Wärmepumpe ist mit der Kältekammer verbunden. Durch Betrieb der Wärmepumpe wird die der Kältekammer entzogene Wärmeenergie letztendlich der Wärmekammer und dem Trockengut zugeführt, wodurch die Verdunstung der Feuchtigkeit einsetzt. Durch das Erwärmen und das Verdunsten der Feuchtigkeit steigt der Druck innerhalb der Wärmekammer. Gleichzeitig wird in der Kältekammer durch Abkühlung der Luft in diesem Bereich die Kondensation der in der Luft vorhandenen Feuchtigkeit bei gleichzeitiger Volumenverringerung erreicht, und eine Druckverringerung herbeigeführt. Es baut sich somit ein Druckunterschied zwischen Kältekammer und Wärmekammer auf. Unterstützend kann mittels der Vakuumpumpe bereits zu Beginn des Trocknungsvorganges ein Unterdruck in der Kältekammer durch Abpumpen der sich in der Kältekammer befindlichen Luft hergestellt werden. Bei einem vorbestimmten Druckunterschied oder nach einer vorbestimmten Trocknungsdauer wird das Schließventil in der die Wärmekammer und die Kältekammer verbindenden Verbindungsleitung geöffnet. Luft mit hohem Feuchtigkeitsgehalt strömt aus der Wärmekammer in die Kältekammer.

In der Kältekammer beginnt die Feuchtigkeit zu kondensieren, so dass in der Kältekammer bei fortlaufender Kondensation trockene und kühle Luft bei bestehendem Unterdruck verbleibt, die bei Bedarf ohne Bedenken in Hinblick auf Feuchtigkeitsschäden mittels der Vakuumpumpe in die Umgebung abgepumpt werden kann, um zu erreichen, dass der in der Kältekammer gewünschte Unterdruck auf einen gewünschten Optimalwert eingeregelt wird. Beim Kondensieren des Wasserdampfes schrumpft dessen Volumen um einen Faktor von ca. 800, was zu einer erneuten Unterdruckbildung in der Kältekammer führt, während es in der Wärmekammer solange zu einer Dampfbildung mit gleichzeitiger Druckerhöhung kommt, wie noch Feuchtigkeit in dem Trockengut vorhanden ist. Nach Ende des Trocknungsvorgangs befindet sich durch Betrieb der Vakuumpumpe im Wesentlichen keine Luft mehr innerhalb der Kälte- und Wärmekammer, so dass nach vollständiger Verdunstung und Auskondensation der Feuchtigkeit ein gleichbleibender Druck in Kälte- und Wärmekammer das Ende des Trockenvorganges anzeigt. Der Trocknungsprozess ist also beendet, wenn beide Kammern, die Wärmekammer mit dem Trockengut und die Kältekammer den gleichen gewünschten Unterdruck aufweisen.

Der Dampferzeuger erzeugt relativ trockenen Dampf, der über eine Dampfleitung in die Wärmekammer eingeleitet wird. Dabei nutzt der Dampferzeuger von der Wärmepumpe zugeleitete Flüssigkeit, vorzugsweise Wasser. Hierfür ist erfindungsgemäß ein Warmwasserbehälter vorgesehen, in den von der Wärmepumpe stammendes warmes Wasser eingespeist wird, welches vom Dampferzeuger zur Produktion des relativ trockenen Dampfes genutzt wird.

Erfindungsgemäß ist die Wärmepumpe über die Wärmeleitung mit dem Warmwasserbehälter, und über eine Kälteleitung mit der Kältekammer verbunden. Ist die Wärmepumpe mit Wärme- oder Kälteleitung ausgebildet, so umfassen diese ein Wärmeträgermedium beziehungsweise ein Kälteträgermedium. Der Dampferzeuger wird somit mit bereits vorgewärmtem Wasser gespeist. Vorzugsweise kann ein Teilstrom des warmen Wassers der Wärmepumpe auch unmittelbar zum Erwärmen der Wärmekammer genutzt werden.

Die die Wärmeleitung kann erfindungsgemäß abschnittsweise durch das Gehäuse bzw. die Gehäusewandung der Wärmekammer verlaufen, sodass diese die Wärmekammer erwärmt, bevor das von der Wärmepumpe erwärmte Wasser in den Warmwasserbehälter gelangt.

Der Warmwasserbehälter kann als Energiespeicher für einen nächsten Trocknungszyklus verwendet werden. Da die Wärmepumpe Temperaturen bis etwa 90 °C erzeugt, hat das im Warmwasserbehälter gespeicherte Wasser ebenfalls eine Temperatur von nahezu 90°.

In einer besonders vorteilhaften Ausführungsvariante wird das in der Kältekammer anfallende Kondensat über eine Wasserpumpe ebenfalls in den Warmwasserbehälter gepumpt.

Es hat sich auch als positiv erwiesen, wenn die Wärmekammer unabhängig vom zugeführten Dampf zusätzlich über eine zusätzliche Heizung, beispielsweise eine elektrische Heizung erwärmt bzw. vorgewärmt wird, um Kondensation an den Innenwänden der Wärmekammer zu vermeiden. Die elektrische Heizung ist vorzugsweise im Gehäuse der Wärmekammer, insbesondere unterhalb des eingelegten Trockenguts angeordnet.

Die von der Wärmepumpe zur Erwärmung der Wärmekammer bereitgestellte Wärmeenergie wird somit unter nur geringem Einsatz externer Energiequellen von der Kondensationsenthalpie geliefert.

Bevorzugt kann der beschriebene Trocknungsvorgang mehrmals hintereinander ausgeführt werden. Dabei können insbesondere eine vorbestimmte Anzahl der Trocknungsvorgänge durchlaufen werden, oder eine vorbestimmte Trocknungszeit kann die Anzahl der zu durchlaufenden Trocknungsvorgänge definieren. In einer besonders bevorzugten Ausführungsform beträgt die Trockenzeit weniger als eine halbe Stunde. Insbesondere bevorzugt wird der, eventuell mehrmals durchlaufene, Trocknungsvorgang beendet, wenn sich nach im Wesentlichen vollständiger Verdunstung und anschließender Auskondensation der Feuchtigkeit des Trockengutes ein gleicher Druck in der Wärmekammer und in der Kältekammer eingestellt hat.

Je größer die Leistung der Wärmepumpe und die Fläche des zugehörigen Wärmetauschers ist, desto schneller verläuft der Trocknungsprozess.

In einer bevorzugten Ausführungsform weist die Wärmekammer eine Einrichtung zur Einlagerung des Trockengutes, insbesondere zum Stapeln oder Aufhängen des Trockengutes, auf. Bevorzugt weist die Wärmekammer ein Regalsystem oder eine Aufhängevorrichtung, insbesondere Rohre oder Stangen, auf.

Weiter bevorzugt ist die Wärmeleitung der Wärmepumpe abschnittsweise innerhalb der Wärmekammer angeordnet und als Regal oder als Aufhängvorrichtung ausgebildet. Dadurch kann zum Beispiel Wäsche ohne mechanische Belastung gelagert oder aufgehängt werden und eine knitterarme Trocknung durchgeführt werden. Ferner wird eine optimale Wärmeübertragung auf das Trockengut gewährleistet. Weiter bevorzugt ist der Verdampfer der Wärmepumpe oder die Kälteleitung innerhalb der Kältekammer als Kühlrippen oder Kühlpaneele ausgebildet, an denen der Wasserdampf effektiv kondensieren kann.

In einer weiter bevorzugten Ausführung ist zu Beginn des Trocknungsvorganges der Druck in der Kältekammer mit der Vakuumpumpe, insbesondere unter einen Druck von 0,5 bar, absenkbar. Besonders bevorzugt senkt die Vakuumpumpe den Druck in der Kältekammer auf einen Druck von 0,3 bar.

In einer weiter bevorzugten Weiterbildung des Trockners umfasst dieser zwei Kondensatbehälter zum Auffangen des auskondensierten Wasserdampfes die sich am Boden der Kältekammer befinden oder mit der Kältekammer verbunden sind. Bei Erreichen eines maximalen Füllstandes oder nach einer festgelegten Zeitspanne wird mindestens einer der Kondensatbehälter gasdicht gegen die Kältekammer abgeschlossen und der Luftdruck in dem mindestens einen Kondensatbehälter an den Umgebungsdruck angeglichen. Das Kondensat wird daraufhin durch Öffnen eines Ventils des Kondensatbehälters an den Warmwasserbehälter oder eine Abwasserleitung abgegeben. Besonders bevorzugt wird daraufhin wieder ein Unterdruck im Kondensatbehälter eingestellt, der dem Druck in der Kältekammer entspricht. Durch Einsatz, insbesondere wechselseitigen Einsatz, der Kondensatbehälter wird erreicht, dass ein ständiger Betrieb einer Vakuumpumpe zum Entfernen des Kondensates nicht benötigt wird. Gleichzeitig wird ein Wiederverdampfen des Kondensates verhindert.

In einer bevorzugten Ausführungsform befindet sich mindestens ein Steuerventil, insbesondere mindestens ein 3-Wege-Ventil, zwischen den Kondensatbehältern und der Kältekammer. Je nach Füllstand der Kondensatbehälter wird mittels des Steuerungsventiles das Kondensat aus der Kältekammer in einen ersten der Kondensatbehälter geleitet, während der zweite Kondensatbehälter gasdicht gegenüber der Kältekammer und dem ersten Kondensatbehälter abgeschlossen wird, und das Kondensat abgeführt wird. Weiter bevorzugt weisen die Kondensatbehälter mindestens ein Ventil, insbesondere ein Druckausgleichsventil, auf, mit welchem ein Druckausgleich zwischen den Kondensatbehältern und der Außenumgebung herstellbar ist.

In einer weiter bevorzugten Ausführungsform weisen beide Kammern Sensoren für Druck, Temperatur und Luftfeuchtigkeit auf, wodurch eine ständige Überwachung des Trocknungsvorganges ermöglicht wird. Besonders bevorzugt weist der Trockner ein Regelungssystem auf, das in Abhängigkeit der gemessenen Werte von Druck, Temperatur oder Luftfeuchtigkeit den Trocknungsvorgang regelt. Insbesondere kann durch das Regelungssystem sichergestellt werden, dass in der Kältekammer eine Mindesttemperatur, insbesondere eine Mindesttemperatur von 2 Grad Celsius, nicht unterschritten wird. Weiter bevorzugt regelt das Regelungssystem die Parameter Druck und Temperatur, insbesondere Druck und Temperatur in der Kältekammer, so dass ein Wiederverdunsten der in der Kältekammer kondensierten Feuchtigkeit verhindert wird.

Bevorzugt werden die Eingangsparameter für die Regelungseinrichtung von den Sensoren für Druck und/oder Temperatur und/oder Luftfeuchtigkeit geliefert. Weiter bevorzugt kann durch Messung eines gleichbleibenden Druckes in der Wärmekammer und in der Kältekammer, insbesondere durch Verschwinden des Druckunterschiedes zwischen Wärmekammer und Kältekammer, durch das Regelungssystem der eventuell mehrmals durchlaufene Trocknungsvorgang beendet werden. Weiter bevorzugt gestattet das Regelungssystem dem Anwender weitestgehend die Kontrolle über den Trocknungsvorgang. So kann der Anwender insbesondere zwischen Betriebsmodi mit oder ohne Druckabsenkung in der Kältekammer zu Beginn des Trocknungsvorganges wählen. Weiter bevorzugt kann der Anwender die gewünschte Restfeuchte im Trockengut oder die Trocknungsdauer wählen.

Bevorzugt weist der Trockner eine Wärmeisolierung zwischen den Kammern und zur Außenumgebung auf. Ebenso bevorzugt weist die Wärmekammer eine über ein Schließelement insbesondere eine Tür, gasdicht abschließbare Öffnung zum Befüllen und Entleeren mit Trockengut, insbesondere mit Wäsche auf.

In einer weiter bevorzugten Ausführungsform weist der Trockner mindestens ein Luftdruckausgleichsventil auf, welches zwischen mindestens einer der Wärme- oder Kältekammern und der Außenumgebung angeordnet ist. Nach Beendigung des Trocknungsvorganges kann durch Öffnen des Luftdruckausgleichsventil ein Druckausgleich zwischen Außenumgebung und Wärme- beziehungsweise Kältekammer hergestellt werden. Nach Herstellen des Druckausgleichs in der Wärmekammer lässt sich ein Schließelement, insbesondere eine Tür, der Wärmekammer öffnen und das getrocknete Trockengut entfernen.

In einer besonders bevorzugten Weiterbildung weist der Trockner eine Vorrichtung zum Abführen überschüssiger Wärme an die Außenumgebung oder an ein Heizungssystem auf, wobei die Wärme bevorzugt über einen Wärmetauscher an das Heizungssystem übertragen wird. Dadurch kann ein für die Kühlung der Kältekammer notwendiger Betrieb der Wärmepumpe gesichert werden, ohne durch eine zu große Wärmezufuhr das Trockengut zu belasten.

In einer weiter bevorzugten Ausführungsform weist der Trockner ein Regelungssystem auf, welches insbesondere zur Regelung des Dampferzeugers, der Wärme- und Vakuumpumpe, der Druckausgleichsventile zwischen der Wärme- und/oder der Kältekammer und der Außenumgebung, der Druckausgleichsventile zwischen den Kondensatbehältern und der Außenumgebung, des Steuerungsventils zwischen den Kondensatbehältern und der Kältekammer, sowie der Schaltmittel in den Leitungen zwischen Wärme- und Kältekammer ausgebildet ist.

In einer bevorzugten Ausführungsform weist die Wärmekammer eine rotierende Wäschetrommel oder ein rotierendes Regal auf. Weiter bevorzugt sind die Wärmekammer und die Kältekammer ineinander oder nebeneinander angeordnet, oder die Kältekammer ist unter der Wärmekammer angeordnet. Insbesondere weist die Kältekammer ein kleineres Volumen als die Wärmekammer auf.

In einer weiteren Ausführungsform ist die Kältekammer bevorzugt in Form einer langen Röhre oder in Form eines langen Schlauches, insbesondere in Form einer spiralförmigen Röhre oder eines spiralförmigen Schlauches, ausgebildet, wobei die, insbesondere als spiralförmige Röhre oder als spiralförmiger Schlauch ausgebildete, Kältekammer mit dem Verdampfer oder mit der ein Kälteträgermedium umfassenden Kälteleitung der Wärmepumpe verbunden ist.

Mittels der Vakuumpumpe wird feuchte Luft aus der Wärmekammer in die, insbesondere als spiralförmige Röhre oder spiralförmiger Schlauch ausgebildete, Kältekammer gepumpt, in welcher der sich in der warmen Luft befindliche Wasserdampf auskondensiert und abläuft. Vorteilhafterweise wird in dieser Ausführungsform kein Kondensatbehälter benötigt, was zu einer sehr kostensparenden Bauweise führt.

Eine weitere Lösung des Problems besteht in der Bereitstellung eines Verfahrens zur Trocknung von Trockengut, insbesondere von Textilien, insbesondere mit einem Trockner nach einem der Ansprüche 1 bis 3.

Bei dem erfindungsgemäßen Verfahren wird die zur Verdampfung der sich im Trockengut befindlichen Feuchtigkeit notwendige Wärmeenthalpie im Wesentlichen von einem Dampferzeuger geliefert, wobei die insbesondere in sich gasdicht abschließbare Wärmekammer und die insbesondere in sich gasdicht abschließbare Kältekammer durch eine Verbindungsleitung verbunden und gasdicht gegeneinander abschließbar sind. Das Verfahren wird energetisch durch eine mit einer Wärmekammer und einer Kältekammer verbundene Wärmepumpe unterstützt. Verfahrensgemäß wird das zu trocknende Trockengut in die Wärmekammer eingelagert. Die Verdampfung der sich im Trockengut befindlichen Feuchtigkeit findet daraufhin in der Wärmekammer und die Kondensation des feuchten Wasserdampfes in der Kältekammer statt. Verfahrensgemäß wird durch Verdunstung der Feuchtigkeit in der Wärmekammer ein Überdruck erzeugt und durch Kondensation der Feuchtigkeit wird in der Kältekammer ein Unterdruck erzeugt, derart dass ein Druckunterschied zwischen Wärmekammer und Kältekammer hergestellt wird.

Mittels einer mit der Kältekammer verbundenen Vakuumpumpe wird während des Trocknungsvorganges ohne Beeinträchtigung der Außenumgebung die durch fortlaufende Kondensation der Feuchtigkeit in der Kältekammer entstehende trockene und kühle Luft aus der Kältekammer abgepumpt, wodurch ein Druckgefälle zwischen Kältekammer und Wärmekammer aufrechterhalten wird.

Durch den Betrieb der Wärmepumpe und des Dampferzeugers wird der notwendige Energieeinsatz minimiert. Weiter wird durch das Zweikammersystem die Feuchtigkeit und das Kondensat räumlich von dem Trockengut getrennt, wodurch ein Wiederbefeuchten des Trockengutes verhindert wird.

Bevorzugt werden die Wärmekammer und die Kältekammer über das in der Verbindungsleitung angeordnete Schließventil zu Beginn des Trockenvorganges gasdicht gegeneinander abgeschlossen. Besonders bevorzugt wird zu Beginn des Trocknungsverfahrens mittels der Vakuumpumpe ein Unterdruck in der Kältekammer erzeugt, insbesondere ein Unterdruck von unter 0,5 bar, weiter insbesondere ein Unterdruck von 0,3 bar.

Relativ trockener Dampf wird vom Dampferzeuger in die Wärmekammer eingeleitet, die Verbindungsleitung zwischen der Wärmekammer und der Kältekammer bleibt dabei über das Schließventil zunächst geschlossen.

Weiter bevorzugt wird durch Betrieb der Wärmepumpe und des Dampferzeugers bei gasdicht gegeneinander abgeschlossenen Wärmekammern und Kältekammern die Temperatur in der Wärmekammer erhöht und die Temperatur in der Kältekammer erniedrigt, wobei durch die erhöhte Temperatur in der Wärmekammer die Feuchtigkeit des in der Wärmekammer einzulagernden Trockengutes verdunstet und der Druck in der Wärmekammer steigt. Gleichzeitig kondensiert die sich in der Luft der Kältekammer befindliche Feuchtigkeit aus. Durch die Auskondensation der Feuchtigkeit in der Kältekammer und die Temperaturverringerung sinkt der Druck in der Kältekammer, es wird also ein Druckunterschied zwischen Wärmekammer und Kältekammer hergestellt. Diese Phase dauert an, bis ein vorgegebener Zieldruck, beispielsweise von 1,0 und 1,5 bar, vorzugsweise von 1,1 bis 1,2 bar in der Wärmekammer erreicht ist.

Bei Erreichen eines vorbestimmten Druckunterschiedes bzw. des Zieldrucks oder einer vorbestimmten Trocknungsdauer wird das Schließventil zwischen der Wärmekammer und der Kältekammer vorzugsweise langsam geöffnet, wodurch ein Druckausgleich zwischen der Kältekammer und der Wärmekammer herbeigeführt wird. Dabei sinkt der Druck in der Wärmekammer, sodass die im Trockengut bzw. im Raum vorhandene Feuchtigkeit bereits bei etwa 90°C weiter verdampfen kann. Des Weiteren gelangt durch Öffnen des Schließventils Luft mit hohem Feuchtigkeitsgehalt von der Wärmekammer in die Kältekammer.

Feuchtigkeit, welche sich in der Luft in der Kältekammer befindet, kondensiert an in der Kältekammer angeordneten Kühlrippen oder Kühlpaneelen aus, so dass insbesondere in der Kältekammer bei fortlaufender Kondensation trockene und kühle Luft verbleibt. Durch die Kondensation und der damit einhergehenden Volumenverringerung der Feuchtigkeit wird ein ständiger Unterdruck in der Kältekammer aufrechterhalten.

Mittels der Vakuumpumpe wird während des Trocknungsvorganges trockene und kühle Luft aus der Kältekammer abgepumpt, wodurch insbesondere die Aufrechterhaltung des Druckgefälles zwischen Kältekammer und Wärmekammer unterstützt wird. Das Trocknungsverfahren wird vorzugsweise mehrere Male wiederholt. Der eventuell mehrmals durchlaufene Trocknungsvorgang wird vorzugsweise dann beendet, wenn ein identischer Druck in der Wärmekammer und in der Kältekammer vorherrscht.

Zur Verhinderung einer Eisbildung in der Kältekammer, welche für den Trocknungsvorgang ungünstig wäre, wird bei einer bevorzugten Ausführung des Trocknungsvorganges eine Mindesttemperatur, insbesondere eine Mindesttemperatur von 2°C, in der Kältekammer nicht unterschritten.

Weiter bevorzugt wird das in der Kältekammer während des Trocknungsvorganges angesammelte Kondensat mittels zweier evakuierbarer, mit der Kältekammer verbundenen und wechselseitig gasdicht gegen diese abschließbaren Kondensatbehältern abgeführt. Bevorzugt wird nach erfolgtem Abführen des Kondensates in den Kondensatbehältern ein Unterdruck entsprechend des in der Kältekammer vorherrschenden Unterdruckes hergestellt.

Durch das Abführen des Kondensates mittels der Kondensatbehälters wird zum einen ein Wiederverdampfen des Kondensates verhindert, zum anderen entfällt der energieaufwändige Betrieb einer weiteren Pumpe zum Abpumpen des Kondensates.

Das Kondensat wird vorzugsweise in einen Warmwasserbehälter geleitet, dem auch von der Wärmepumpe erzeugtes warmes Wasser zugeführt wird. Das Wasser im Warmwasserbehälter wird vom Warmwasserbehälter zur Dampferzeugung genutzt.

Bei dem Verfahren von der Wärmepumpe erzeugte, nicht zur Trocknung benötigte überschüssige Wärmeenergie wird über eine dafür ausgebildete Vorrichtung an die Außenumgebung oder an einer Heizanlage abgeführt. Hierdurch wird ein kontinuierlicher Betrieb der Wärmepumpe zur Absenkung der Temperatur in der Kältekammer gewährleistet, ohne das Trockengut, insbesondere die Textilien, in der Wärmekammer durch zu hohe Wärmezufuhr zu belasten.

Weiter bevorzugt befinden sich zur Überwachung der Trocknungsbedingungen in der Wärmekammer und in der Kältekammer Sensoren, welche beispielsweise den Druck oder die Temperatur oder die Luftfeuchtigkeit in den Kammern messen.

Bei einer insbesondere bevorzugten Ausführung des Trocknungsvorganges wird der Trocknungsvorgang durch ein Regelungssystem geregelt, wobei dem Regelungssystem als Eingangsparameter zum Beispiel der Druck oder die Temperatur oder die Luftfeuchtigkeit innerhalb der Wärmekammer oder der Kältekammer dienen. Weiter bevorzugt kann über das Regelungssystem die gewünschte Restfeuchte oder die gesamte Trocknungsdauer eingestellt werden. Mit dem Regelungssystem wird vorteilhafter Weise erreicht, dass der Anwender die vollständige Kontrolle über den Trocknungsvorgang erhält.

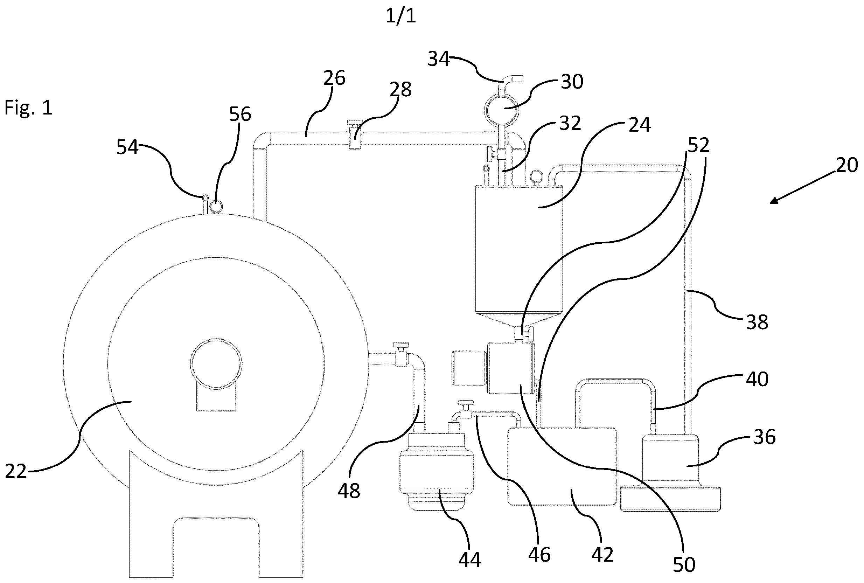

Im Folgenden wird das beanspruchte Trocknungsverfahren und der erfindungsgemäße Trockner anhand eines Ausführungsbeispiels beschrieben. Die einzige Figur zeigt eine vereinfachte Darstellung eines erfindungsgemäßen Trockners.

Die Figur zeigt einen Trockner 20 zum Trocknen von Trockengut, insbesondere Textilien. Eine Wärmekammer 22 und eine Kältekammer 24, die gasdicht gegeneinander und/oder gegen die Außenumgebung abschließbar ausgebildet sind, sind im gezeigten Ausführungsbeispiel nebeneinander angeordnet und über eine Verbindungsleitung 26 fluidleitend miteinander verbunden. In der Verbindungsleitung 26 ist ein Schließventil 28 angeordnet, über das die Verbindungsleitung 26 geschlossen werden kann.

Im gezeigten Ausführungsbeispiel ist eine Vakuumpumpe 30 über eine Vakuumleitung 32 mit der Kältekammer 24 verbunden. Die Vakuumpumpe 30 weist weiterhin eine Umgebungsleitung 34 auf, über die Luft bzw. Überdruck an die Umgebung abgegeben werden kann.

Eine mit den zwei Kammern 22; 24 wirkverbindbare Wärmepumpe 36, die zum Beispiel einen Kondensator und einen Verdampfer aufweisen kann (nicht gezeigt), ist über eine Kälteleitung 38 mit der Kältekammer 24 verbunden. Weiterhin ist die Wärmepumpe 36 über eine Wärmeleitung 40 mit einem Warmwasserbehälter 42 verbunden, in den sie erwärmtes Wasser einleitet.

Über eine Entnahmeleitung 46 ist ein Dampferzeuger 44 mit dem Warmwasserbehälter 42 verbunden. Weiterhin ist der Dampferzeuger 44 über eine Dampfleitung 48 mit der Wärmekammer 22 verbunden. Der Dampferzeuger 44 nutzt das Wasser aus dem Warmwasserbehälter 42 zur Erzeugung von Dampf, der über die Dampfleitung 48 zur Trocknung des Trockenguts in die Wärmekammer 22 geleitet wird. Auch in der Entnahmeleitung 46 und der Dampfleitung 48 sind Schließventile 28 angeordnet.

Zwischen der Kältekammer 24 und dem Warmwasserbehälter 42 ist weiterhin eine Wasserpumpe 50 vorgesehen, über deren Kondensatleitungen 52 Kondensat aus der Kältekammer 24 in den Wasserbehälter 42 einleitbar ist.

Die Wärmekammer 22 ist mit einem Drucksensor 54 und einem Thermometer 56 ausgestattet.

## Patentansprüche

1. Trockner (20) zum Trocknen von Trockengut (21), insbesondere Textilien mit,
- einer Wärmekammer (22), in der zu trocknendes Trockengut anzuordnen ist, und einer Kältekammer (24), wobei die Wärmekammer (22) und die Kältekammer (24) gasdicht gegeneinander und/oder gegen die Außenumgebung abschließbar ausgebildet sind,
- einer Verbindungsleitung (26), die die Kammern (22, 24) fluidleitend miteinander verbindet und ein Schließventil (28) aufweist,
- einer mit der Kältekammer (24) wirkverbundenen Vakuumpumpe (30),
- einer mit den zwei Kammern (22; 24) wirkverbindbaren Wärmepumpe (36), wobei die Wärmepumpe (36) über eine Kälteleitung (38) mit der Kältekammer (24), und über eine Wärmeleitung (40) mit einem Warmwasserbehälter (42) verbunden ist, wobei die Wärmepumpe (36) erwärmtes Wasser in den Warmwasserbehälter (42) einleitet,
- einem Dampferzeuger (44), der erzeugten Dampf über eine Dampfleitung (48) in die Wärmekammer (22) leitet, wobei der Dampferzeuger (44) über eine Entnahmeleitung (46) mit dem Warmwasserbehälter (42) verbunden ist, und das erwärmte Wasser aus dem Warmwasserbehälter (42) zur Erzeugung von Dampf nutzt,
wobei sich in der Wärmekammer (22) der vom Dampferzeuger (44) zugeleitete Dampf mit Feuchtigkeit des Trockenguts vermischt und der entstehende feuchte Dampf über die Verbindungsleitung (26) der Kältekammer (24) zuführbar ist, wobei durch Verdunstung der Feuchtigkeit in der Wärmekammer (22) ein Überdruck erzeugbar ist, wobei durch Kondensation der Feuchtigkeit in der Kältekammer (24) ein Unterdruck erzeugbar ist, derart dass ein Druckunterschied zwischen Wärmekammer (22) und Kältekammer (24) herstellbar ist, und wobei die Vakuumpumpe (30) zum bedarfsabhängigen Abpumpen trockener Luft aus der Kältekammer (24) ausgebildet ist.

2. (20) zum Trocknen nach Anspruch 1,
**dadurch gekennzeichnet,**
**dass** zwischen der Kältekammer (24) und dem Warmwasserbehälter (42) eine Kondensatleitung vorgesehen ist, über die Kondensat aus der Kältekammer (24) in den Warmwasserbehälter (42) einleitbar ist.

3. Verfahren zur Trocknung von zu trocknendem Gut mit einem Trockner (20) nach einem der Ansprüche 1 bis 2, wobei
- das zu trocknende Gut (22) in der Wärmekammer (22) eingelagert wird,
- die Verdampfung der sich im zu trocknenden Gut befindlichen Feuchtigkeit in der Wärmekammer (22) stattfindet,
- die Kondensation des Wasserdampfes in der mit der Wärmekammer (22) über eine Verbindungsleitung (26) verbundene gasdicht gegen die Wärmekammer (22) abschließbaren Kältekammer (24) stattfindet,
- durch Verdunstung der Feuchtigkeit in der Wärmekammer (22) ein Überdruck erzeugt wird,
- durch Kondensation der Feuchtigkeit in der Kältekammer (24) ein Unterdruck erzeugt wird, derart dass ein Druckunterschied zwischen Wärmekammer (22) und Kältekammer (24) hergestellt wird, und
- die durch die Kondensation des Wasserdampfes in der Kältekammer (22) entstehende trockene und kühle Luft mit einer mit der Kältekammer (24) verbundenen Vakuumpumpe (26) abgepumpt wird,
wobei die zur Verdampfung der sich im Trockengut befindlichen Feuchtigkeit notwendige Wärmeenthalpie von einem Dampferzeuger (44) und einer mit einer Wärmekammer (22) und einer Kältekammer (24) verbundenen Wärmepumpe (36) geliefert wird.

4. Verfahren nach Anspruch 3, **dadurch gekennzeichnet, dass** von der Wärmepumpe (36) erzeugtes warmes Wasser in einen Warmwasserbehälter (42) geleitet wird, wobei der der Dampferzeuger (44) das erwärmte Wasser über eine Entnahmeleitung (46) aus dem Warmwasserbehälter (42) entnimmt, daraus Dampf erzeugt und über eine Dampfleitung (48) in die Wärmekammer (22) einleitet.

5. Verfahren nach Anspruch 4, **dadurch gekennzeichnet, dass** Kondensat aus der Kältekammer (22) über eine zwischen der Kältekammer (24) und dem Warmwasserbehälter (42) angeordnete Kondensatleitung in den Warmwasserbehälter (42) einleitbar ist.

## Claims

1. A dryer (20) for drying dry goods (21), in particular textiles, with
- a heating chamber (22), in which the dry good to be dried is to be arranged, and a cooling chamber (24), wherein the heating chamber (22) and the cooling chamber (24) are designed so that they can be sealed gastight against each other and/or against the outside environment,
- a connecting line (26), which connects the chambers (22, 24) with each other in a fluid conducting manner, and has a closing valve (28),
- a vacuum pump (30) effectively connected with the cooling chamber (24),
- a heating pump (36) effectively connected with the two chambers (22; 24), wherein the heating pump (36) is connected with the cooling chamber (24) via a cooling line (38), and with a hot water tank (42) via a heating line (40), wherein the heat pump (36) introduces heated water into the hot water tank (42),
- a steam generator (44), which directs generated steam into the heating chamber (22) via a steam line (48), wherein the steam generator (44) is connected with the hot water tank (42) via an extraction line (46), and uses the heated water from the hot water tank (42) to generate steam,
wherein the steam supplied by the steam generator (44) is mixed with moisture of the dry good in the heating chamber (22), and the resulting moist steam can be fed to the cooling chamber (24) via the connecting line (26), wherein an overpressure can be generated by vaporizing the moisture in the heating chamber (22), wherein an underpressure can be generated by condensing the moisture in the cooling chamber (24), such that a pressure difference can be produced between the heating chamber (22) and cooling chamber (24), and wherein the vacuum pump (30) is designed for a demand-based pumping of dry air from the cooling chamber (24).

2. The dryer (20) for drying according to claim 1, **characterized in that** a condensate line is provided between the cooling chamber (24) and the hot water tank (42), through which the condensate from the cooling chamber (24) can be introduced into the hot water tank (42).

3. A method for drying dry goods with a dryer (20) according to one of claims 1 to 2, wherein
- the dry good (22) to be dried is stored in the heating chamber (22),
- the evaporation of the moisture in the good to be dried takes place in the heating chamber (22),
- the condensation of the steam takes place in the cooling chamber (24), which is connected with the heating chamber (22) via a connecting line (26) and can be sealed in a gastight manner against the heating chamber (22),
- an overpressure is generated by vaporizing the moisture in the heating chamber (22),
- an underpressure is generated by condensing the moisture in the cooling chamber (24), such that a pressure difference is produced between the heating chamber (22) and cooling chamber (24), and
- the dry and cool air produced by condensing the steam in the cooling chamber (22) is pumped out with a vacuum pump (26) connected with the cooling chamber (24),
wherein the heat enthalpy necessary for evaporating the moisture in the dry good is supplied by a steam generator (44) and a heat pump (36) connected with a heating chamber (22) and a cooling chamber (24).

4. The method according to claim 3, **characterized in that** hot water generated by the heat pump (36) is directed into a hot water tank (42), wherein the steam generator (44) extracts the heated water from the hot water tank (42) via an extraction line (46), generates steam from it, which it introduces into the heating chamber (22) via a steam line (48).

5. The method according to claim 4, **characterized in that** condensate from the cooling chamber (22) can be introduced into the hot water tank (42) via a condensate line arranged between the cooling chamber (24) and the hot water tank (42).

## Revendications

1. Sécheur (20), destiné à faire sécher du produit à sécher (21), notamment des textiles, comprenant
- une chambre thermique (22), dans laquelle il convient de placer du produit à sécher devant être séché et une chambre de refroidissement (24), la chambre thermique (22) et la chambre de refroidissement (24) étant conçues de sorte à pouvoir être fermées de manière étanche au gaz l'une par rapport à l'autre et / ou par rapport à l'environnement,
- une conduite de raccordement (26), qui relie de manière fluidique l'une avec l'autre les chambres (22, 24) et qui comporte une soupape d'arrêt (28),
- une pompe à vide (30), reliée de manière opérationnelle avec la chambre de refroidissement (24),
- une pompe à chaleur (36), susceptible d'être reliée de manière opérationnelle avec les chambres (22 ; 24), la pompe à chaleur (36) étant reliée par l'intermédiaire d'une conduite de refroidissement (38) avec la chambre de refroidissement (24) et par l'intermédiaire d'une conduite thermique (40) avec un réservoir d'eau chaude (42), la pompe à chaleur (36) introduisant de l'eau chauffée dans le réservoir d'eau chaude (42),
- un générateur de vapeur (44), qui dirige de la vapeur générée par l'intermédiaire d'une conduite à vapeur (48) dans la chambre thermique (22), le générateur de vapeur (44) étant relié par l'intermédiaire d'une conduite de soutirage (46) avec le réservoir d'eau chaude (42) et utilisant l'eau chauffée à partir du réservoir d'eau chaude (42), pour générer de la vapeur,
dans la chambre thermique (22), la vapeur amenée par le générateur de vapeur (44) étant mélangée avec de l'humidité du produit à sécher et la vapeur humide produite pouvant être amenée par l'intermédiaire de la conduite de raccordement (26) vers la chambre de refroidissement (24), une surpression pouvant être générée par évaporation de l'humidité dans la chambre thermique (22), une dépression pouvant être générée par condensation de l'humidité dans la chambre de refroidissement (24), de sorte qu'une pression différentielle puisse être établie entre la chambre thermique (22) et la chambre de refroidissement (24) et la pompe à vide (30) étant conçu pour pomper en fonction des besoins de l'air sec hors de la chambre de refroidissement (24).

2. Sécheur (20), destiné à faire sécher selon la revendication 1, **caractérisé en ce qu'**entre la chambre de refroidissement (24) et le réservoir d'eau chaude (42) est prévue une conduite de condensat, par l'intermédiaire de laquelle du condensat peut être introduit à partir de la chambre de refroidissement (24) dans le réservoir d'eau chaude (42).

3. Procédé, destiné à faire sécher du produit à sécher à l'aide d'un sécheur (20) selon l'une quelconque des revendications 1 à 2, lors duquel
- l'on stocke le produit à sécher (22) dans la chambre thermique (22),
- l'évaporation de l'humidité se trouvant dans le produit à sécher a lieu dans la chambre thermique (22),
- la condensation de la vapeur d'eau a lieu dans la chambre de refroidissement (24), reliée avec la chambre thermique (22) par l'intermédiaire d'une conduite de raccordement (26), susceptible d'être fermée de manière étanche au gaz par rapport à la chambre thermique (22),
- par évaporation de l'humidité dans la chambre thermique (22), une surpression est générée,
- par condensation de l'humidité dans la chambre de refroidissement (24), une dépression es générée, de sorte qu'une pression différentielle soit établie entre la chambre thermique (22) et la chambre de refroidissement (24) et
- l'air sec et frais produit par la condensation de la vapeur d'eau dans la chambre de refroidissement (22) est pompé à l'aide d'une pompe à vide (26) reliée avec la chambre de refroidissement (24),
l'enthalpie thermique nécessaire pour l'évaporation de l'humidité se trouvant dans le produit à sécher étant fournie par un générateur de vapeur (44) et une pompe à chaleur (36) reliée avec une chambre thermique (22) et une chambre de refroidissement (24).

4. Procédé selon la revendication 3,
**caractérisé en ce que** de l'eau chaude générée par la pompe à chaleur (36) est dirigée dans un réservoir d'eau chaude (42), le générateur de vapeur (44) soutirant l'eau chauffée par l'intermédiaire d'une conduite de soutirage (46) à partir du réservoir d'eau chaude (42), en générant de la vapeur et l'introduisant par l'intermédiaire d'une conduite à vapeur (48) dans la chambre thermique (22).

5. Procédé selon la revendication 4, **caractérisé en ce que** du condensat peut être introduit à partir de la chambre de refroidissement (22) dans le réservoir d'eau chaude (42), par l'intermédiaire d'une conduite de condensat placée entre la chambre de refroidissement (24) et le réservoir d'eau chaude (42).
